# EUROPEAN PATENT APPLICATION

(11) **EP 2 281 716 A1**
(43) Date of publication of application: **09.02.2011**
(21) Application number: 09167056.2
(22) Date of filing: 03.08.2009
(51) Int. Cl.: B60P 3/34, E04B 1/343

(54) **An expanding container**

(71) Applicant: Uniteam Holding AS, 2021 Skedsmokorset (NO)
(72) Inventor: The designation of the inventor has not yet been filed
(74) Representative: Smedseng, Øyvind

(57) **Abstract**

An expanding container of the box-in-box type having a central box (1) and first (2) and second (3) side boxes nested therein in a transport condition. The side boxes are movable partly supported on hydraulically operated telescoping beams to a laterally extended operating condition. The floor (12) of the first side box (2) is hinged at its outer end to the lower part of the outer wall of the first box (2) so as to be pivotal between a vertical transport condition and a horizontal operating condition flush with the floor of the central box (1). The second side box (3) is lowered somewhat when moved laterally outwards so that also its floor becomes flush with the central box floor in operating condition.

## Description

The present invention relates to an expanding container as defined in the preamble of claim 1. Such a container is often referred to as a box-in-box container.

Containers of this type are used e.g. for military purposes for deployment in the field as portable shelters, hospitals, command centers, etc.

In the most common type of expanding container having laterally movable side boxes or drawers, the side boxes have to be pulled manually from their nested transport condition to the extended service condition. To enable two persons to do this, the container will have to be levelled to an almost perfect horizontal position. This means that when the container has been transported on a truck, it will have to be lifted down from the truck to the ground and levelled before being brought into the extended service condition. This also means that there are limits to the places where the container can be located.

Furthermore, the side boxes are pulled straight out from the central box, with the result that the level of the floors of the extended side boxes will be different from each other and higher than the floor of the central box, thus resulting in awkward steps between them. Besides, the ceiling height is severely limited, particularly in the inner side box.

From US patent 6,108,983 there is known a two part expanding container. One side box is adapted to be pushed into and out of a central box, e.g. by hydraulic cylinders. In a collapsed state, the floor of the side box is located above the floor of the central box. In an expanded state, the floor of the side box is recessed becoming flush with the floor of the central box. This is a complicated construction, and it is difficult to store anything on the floor during transport.

US patent application 2007/0079573 describes a three part expanding container. When mounting, telescopic girders are pulled out and supported on the ground at their ends by stays. The girders may be moved out and in by motors with toothed pinions engaging corresponding toothed tracks in the girders. Then, the side boxes are pushed out onto the girders. The floors of the side boxes are in two parts longitudinally and folded. This construction is complicated to mount in that the girders must be pulled put first and supported at the ends. The joint in the floor of each side box is long. This means that the stress on the hinges becomes large, which reduces the load-carrying capacity.

US patent 2,901,282 describes an expanding container in which the floors of the side boxes are folded longitudinally. The expansion and collapsing of the container is performed by hydraulic cylinders, and the boxes are supported on cantilever girders. However, such folded floors consume much space when folded together, which limits the possible compactness of the arrangement, and the area available when expanded.

An object of the present invention is to provide an expanding box-in-box container that can be brought to service condition quickly and automatically without removing it from the transporting vehicle and without the need for substantial manual labour.

A further object is to obtain a box-in-box container wherein the floors are at the same level in service condition and wherein the ceiling height is limited to a lesser degree.

These and other objects are obtained by the expanding container defined in the appended claims and exemplified in the appended drawings.

In the drawings:
Fig. 1a and 1b are perspective drawings of the invention in back and front view, respectively,
Fig. 2 is a section through the invention when collapsed,
Fig. 3 is a corresponding box showing the container in operating condition,
Fig. 4 is a section through the invention, in a collapsed transport position,
Fig. 5 is a section through the container with the right hand "drawer" partly open,
Fig. 6 is a section through the container with the right hand "drawer" fully open,
Fig. 7 is a drawing showing how the left hand drawer is opened,
Fig. 8 is a drawing showing details of the left hand drawer,
Fig. 9 is a perspective drawing op the invention when mounted ready for use.

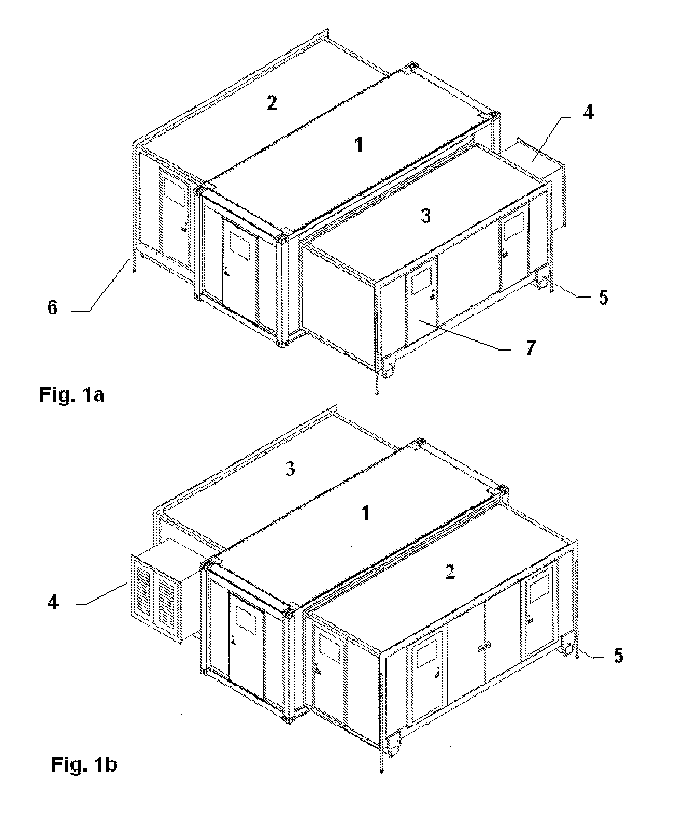

As shown in Fig. 1a, the invention consists of a box-in-box solution including a central box 1, a left hand side box 2 and a right hand side box 3. On the right hand side box there is also a technical room 4. Support legs 6 or stays are mounted in the corners of the side boxes. The side boxes also include brackets 5 for mounting hydraulic cylinders. The boxes are provided with doors 7. The side boxes are adapted to be pulled into the central box.

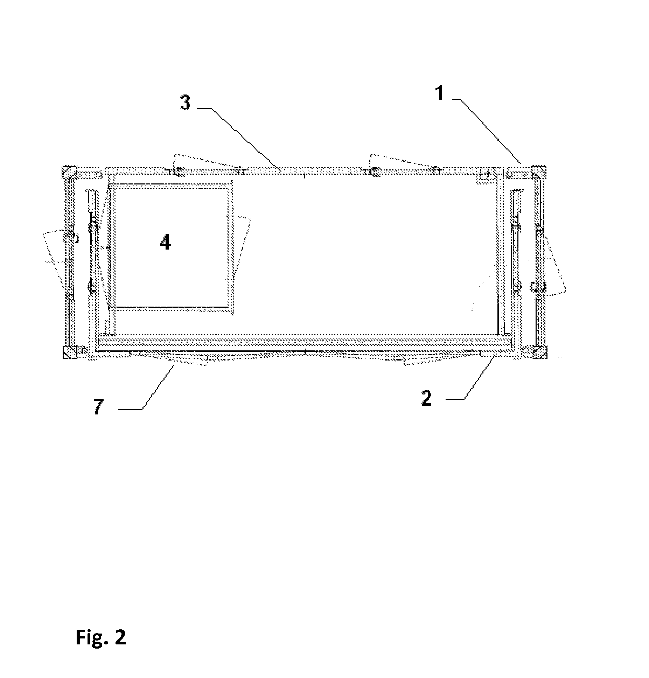

Fig. 2 shows the invention in section, in a collapsed state. The left hand side box 2 is pulled into the central box 1. The right hand box 3 is then pulled into the left hand box. Before this, the technical room 4 has been pulled into the right hand side box 3.

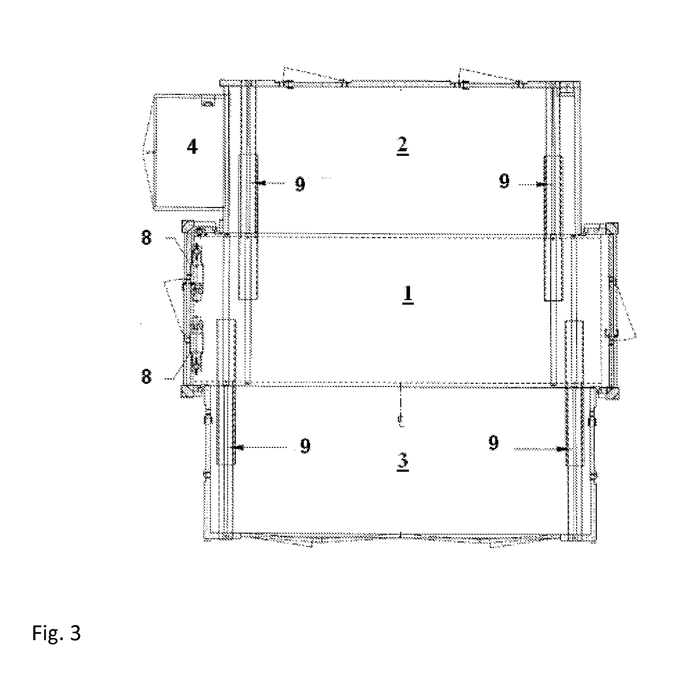

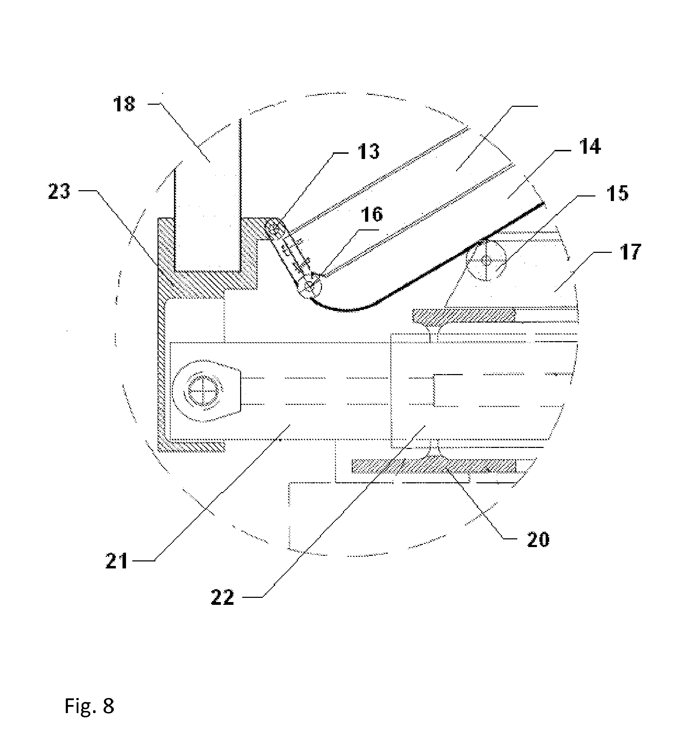

Fig. 3 is a plan section through the invention, in a pulled out or mounted condition. The maneuvering of the boxes is done by means of hydraulic telescopic rods 9 (i.e. piston-cylinders assemblies) which are fastened in each end in opposite outer walls of the respective side boxes. The hydraulic telescopic rods are mounted inside telescopic girders. This is more clearly shown in the following drawings, in particular Fig. 8. The central box also includes two power units 8 for operating the hydraulic telescopic rods. The power units, one for each side box, include pumps feeding the telescopic rods. The feed system for each side box (not shown) includes an equalizer securing that the fluid flow to the hydraulic telescopic rods is distributed equally between the rods. This is to ensure that their pistons move at the same speed. The pumps may be driven by any suitable means, but preferably by 24 V DC electric motors, as 24 V DC power is available in most trucks.

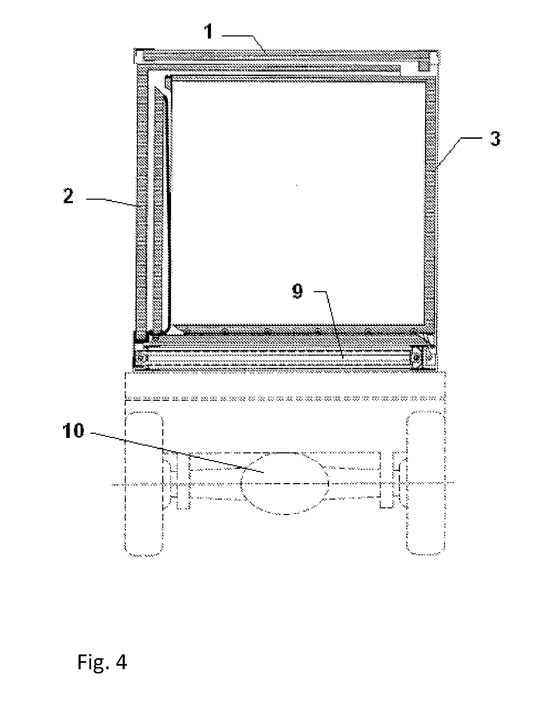

Fig. 4 shows the invention in cross section, with the boxes nested. Here, the invention is mounted on a vehicle, such as a truck.

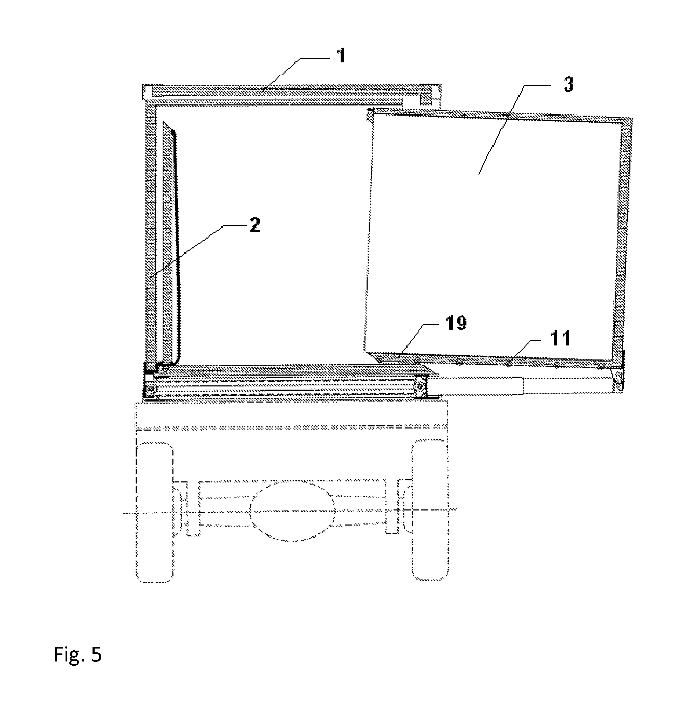

Fig. 5 shows the right hand box partly expanded. The box includes rollers 11 in the floor 19.

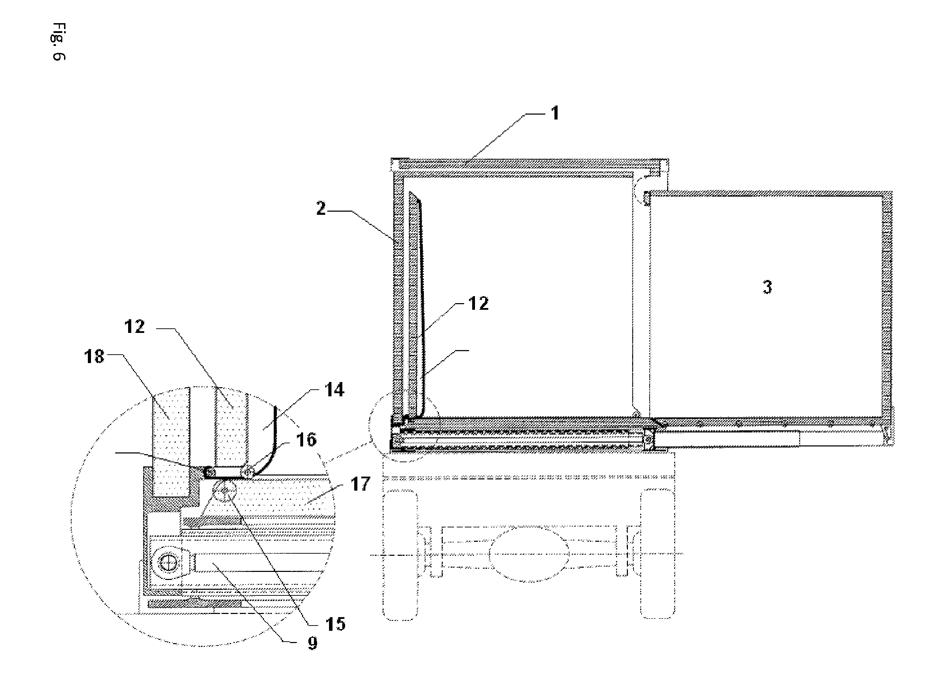

In Fig. 6 the box is fully expanded, and it has been lowered such that its floor 19 is level with the floor 17 in the central box. In the left hand part of the drawing there is a detailed drawing of the hinging of the floor in the left hand box. A hinge 13 connects the floor 12 to the lower part of the side wall 18. The floor 12 also includes a support roller 16. The support roller 16 rests on the floor 17 in the right hand box, and supports the floor 12 in the left hand box at the start of the expansion movement. The support roller will support the floor until it has passed a roller 15 mounted in the floor 17 of the right hand box. Then, the floor 12 of the left hand box will start to pivot in the hinge 13.

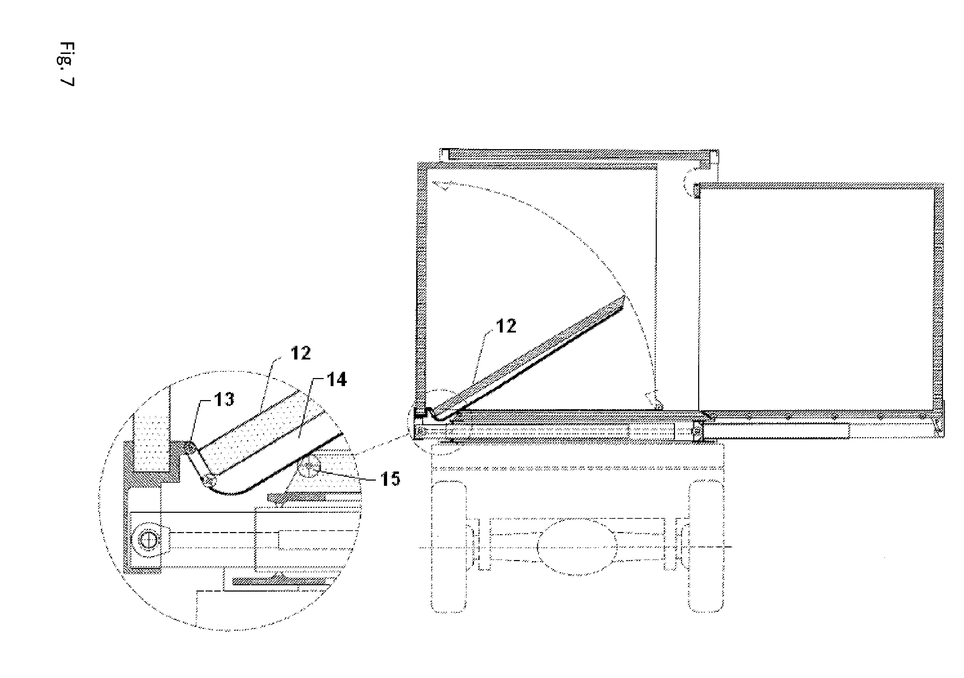

At that point, the roller 15 will engage a guiding profile in the floor 12 and control the lowering of the floor. This is evident from Fig. 7, but Fig. 8 shows the details of this even clearer.

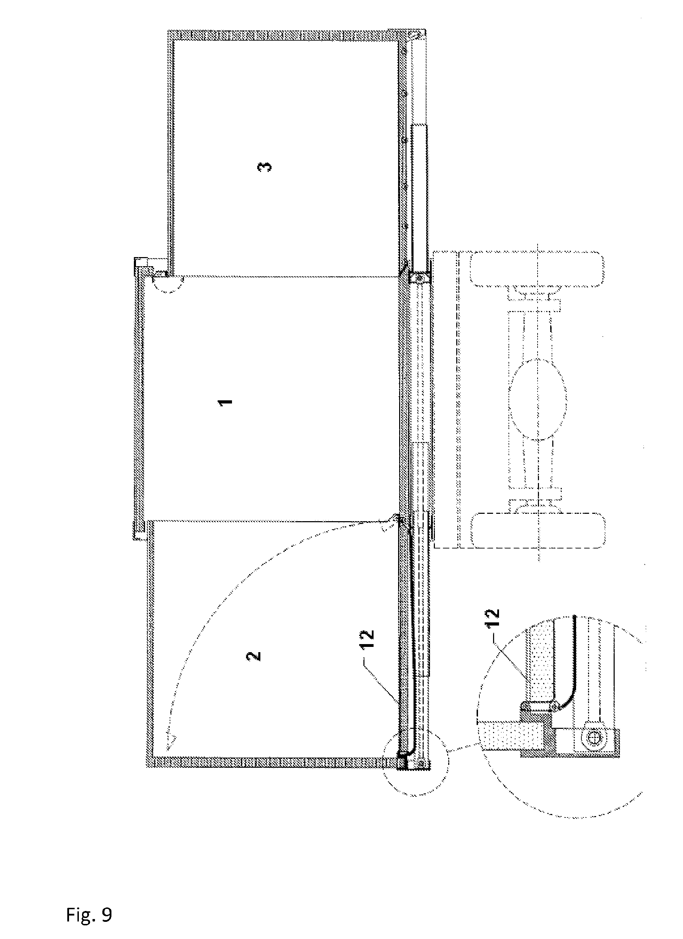

Fig. 9 shows the invention in section, in operating condition. The floor 12 of the left hand box 2 is now fully lowered level with the floors of the other boxes.

Although the drawings show a container having two extensible side boxes, it will be understood that the present invention can also be envisioned with only one side box. Other modifications and variations within the scope of the invention will be apparent to the skilled person. As an example, the hydraulic cylinders shown may be replaced by a screw arrangement. The rollers mentioned in the text may also be replaced with any other anti-friction means suited for the purpose.

List of reference numerals:
- 1: Central box
- 2: Left hand expandable box
- 3: Right hand expandable box
- 4: Technical room
- 5: Bracket for fastening hydraulic cylinder to box
- 6: Support leg
- 7: Door
- 8: Power unit
- 9: Hydraulic telescopic rod for pulling the drawers out and in
- 10: Vehicle
- 11: Roller
- 12: Hinged floor element
- 13: Hinge
- 14: Guiding profile
- 15: Roller
- 16: Support roller mounted on the hinged floor element
- 17: Floor of central box
- 18: Wall of left hand drawer
- 19: Floor of right hand drawer
- 20: Side beam on bottom frame
- 21: Telescopic girder, inner element
- 22: Telescopic girder, outer element
- 23: Wall profile for expanding box, with mounting plates for telescopic girder

## Claims

1. An expanding container comprising a central box (1) having open longitudinal sides, a first side box (2) having one open longitudinal side and fitting inside the central box (1) through one of its open longitudinal sides, and a second side box (3) fitting inside the first side box (2) through its open longitudinal side and the other open longitudinal side of the central box (1), the closed longitudinal sides of the side boxes (2, 3) forming the longitudinal sides of the container when in a transport condition, the side boxes (2, 3) being movable laterally from the transport condition to form extensions of the central box (1) on either side thereof,
**characterized in that** the floor (12) of the first side box (2) forms a complete surface and is hinged to the base of its closed longitudinal side (18) so as to be pivotal between an upright position in the transport condition and a horizontal position, preferably flush with the floor (17) of the central box (1), when in the extended operating position.

2. A container according to claim 1, wherein the second side box (3) is arranged to be lowered somewhat during the lateral movement so that its floor (19) will be flush with the floor (17) of the central box (1) when in the extended position.

3. A container according to claim 1, wherein the side boxes are movable to, and preferably from, said extended position by telescoping beams (21, 22) mounted to the lower part of the central box.

4. A container according to claim 3, wherein mechanical means, preferably hydraulic piston-cylinder assemblies (9), are arranged to perform the movement of the side boxes (2, 3) from transport condition to the extended condition, and vice versa.

5. A container according to claim 4, wherein said mechanical means are arranged inside said telescoping beams (21, 23).

6. A container according to claim 4 or 5, wherein there are at least two telescoping beams (21, 22) with hydraulic piston-cylinder arrangements (9) for each side box (2, 3), the hydraulic feed system for each side box containing an equalizer that splits the hydraulic fluid flow equally between the hydraulic cylinders to ensure that their pistons move at the same speed.

7. A container according to claim 6, wherein the pumps of the hydraulic feed systems are driven by 24 V DC electric motors.

8. A container according to any one of the preceding claims, wherein at least one guide profile (14) is arranged on the underside of the pivotal floor (12) of the first side box (2) for cooperation with an anti-friction arrangement, preferably a roller (15), at the adjacent edge of the floor of the central box for lowering and raising the pivotal floor (12) upon outward and inward movement, respectively, of the first side box.

9. A container according to any one of claims 2-8, wherein anti-friction means, such as rollers (11), are arranged on the underside of the floor (19) of the second side box (3) to permit the second side box to be supported on the floor (17) of the central box (1) during its lateral movements.

10. A container according to any one of the preceding claims, wherein the container is supported on a vehicle, preferably on the bed of a truck, when brought from transport to service condition.
